# EUROPEAN PATENT SPECIFICATION

(11) **EP 3 263 887 B1**
(45) Date of publication and mention of the grant of the patent: **03.07.2019**
(21) Application number: 17169939.0
(22) Date of filing: 08.05.2017
(51) Int. Cl.: F03B 17/06, H02N 2/18

(54) **ELECTRIC GENERATOR TO BE INSTALLED IN A WATER COURSE**
STROMGENERATOR ZUR INSTALLATION IN EINER WASSERSTRÖMUNG
GÉNÉRATEUR ÉLECTRIQUE POUR INSTALLATION DANS UN COURS D'EAU

(30) Priority: 09.05.2016 IT UA20163275; 09.05.2016 IT UA20160691 U
(43) Date of publication of application: 03.01.2018
(73) Proprietor: Neglenco S.r.l., 23900 Lecco (LC) (IT)
(72) Inventor: CINQUE, Gledis, 23900 Lecco (LC) (IT)
(74) Representative: Marietti, Andrea

(56) References cited:
- WO-A1-2005/080791
- WO-A1-2014/125449
- WO-A1-2014/135551
- JP-A- H08 165 980
- JP-A- 2014 111 932

## Description

The present invention relates to an electric generator suited to be installed in a water course, of the type having a vibrating element at least partially submerged. In particular, the present invention relates to an electric generator suited to be installed in rivers, canals and the like.

In particular, elements vibrating when inserted in a moving fluid are known. Similar elements are described, for example in US2013119826 and US2016013737. In particular, the two documents describe a wind power generator, comprising an elongated body having truncated-conical shape and piezoelectric elements. As a result of an airflow hitting the elongated body, downstream of the body vortexes are formed which cause a fluid-dynamic force (lift force) on the body itself. This fluid-dynamic force alternates its own direction so as to cause the body to vibrate. Piezoelectric elements convert the vibrating motion of the body into electrical energy.

The wind has variable behavior over time and allows the production of a limited amount of electrical energy. In order to overcome this problem, vibrating elements must be produced having large bodies, in particular of great length. This involves obvious disadvantages in production and installation.

US2016013737 proposes, as an alternative, the use in water rather than in air, in an unspecified manner. Vibrating elements submerged in water and constrained to the bottom of the water course are described by US2013227940.

Such a solution is difficult to be installed and implies a considerable bulk within the course itself. Even the device maintenance turns out to be quite complex (and in particular cleaning the device, such as from algae or the like). Moreover, the electrical part of the device is mostly submerged in water.

WO 2005/080791 and JP H08 165980 disclose generators with a supporting structure outside a water course supporting at least partially submerged vibrating elements. is an object of the present invention to provide an electric generator with vibrating elements of axysimmetric shape allowing high power to be generated.

It is a further object of the present invention to provide an electric generator with vibrating element allowing the bulk, i.e. the piece size, to be limited.

It is a further object of the present invention to provide an electric generator with vibrating element that is simple to manufacture, install and maintain.

The present invention achieves these and other objects by implementing an electric generator suited to be installed in a water course, comprising a supporting structure constrainable outside of the water course, an axysimmetric vibrating element and means for converting the kinetic energy of the vibrating element into electric energy. The electric generator further comprises position adjusting means to adjust the position of the vibrating element, the position adjusting means being constrained to the supporting structure and moving with at least one degree of freedom, in an active and controlled way, the vibrating element with respect to the supporting structure. The mentioned at least one degree of freedom comprises the adjustment of the ratio of the volume of the portion of the vibrating element submerged in the water course to the volume of the portion of the vibrating element non-submerged in the water course.

Preferably, the vibrating element has more than one degree of freedom; according to a preferred aspect it has at least three degrees of freedom of rotary type, i.e. it can rotate around three axes orthogonal to each other.

The installation of the electric generator is simple, as it is done out of the water. In particular, the supporting structure is firstly laid on the ground (and preferably also constrained thereto), and then the vibrating element is submerged in the water.

The space occupied by the electric generator within the water course is reduced, because this space is substantially limited to the vibrating body.

Furthermore, the electric part (or at least most of it) can be kept outside the water, with evident safety advantages.

Finally, the electric generator (in particular the vibrating element) is easy to be maintained (and particularly to be cleaned) because it can be completely pulled out of water through the mentioned adjusting means.

According to a particular aspect of the invention, the vibrating element is designed so as to generate vortexes in the water course, downstream of the vibrating element, so as to induce a fluid-dynamic force on the vibrating element itself.

According to a preferred aspect of the invention, the means for converting energy comprise at least one piezoelectric element, and/or at least one linear electric generator.

According to the present invention, the vibrating element has a substantially symmetrical shape with respect to its own axis. Typically, the section of the vibrating element varies along the axis of the vibrating element itself. In particular, the section of the vibrating element progressively increases along the axis of the vibrating element itself. In a possible embodiment, the vibrating element has truncated-conical shape.

According to a further aspect of the present invention, the supporting structure comprises a supporting arm to support the vibrating element. In particular, the supporting arm turns out to be a convenient and easy solution to support and move the vibrating element.

Preferably, the supporting structure also has means to be stably anchored to the ground.

According to an aspect of the present invention, the arm has variable length, typically by having telescopic shape.

According to a preferred aspect of the present invention, the device comprises means for adjusting the position of the axis of this arm. In other words, the position of the arm axis can be changed in space, so that the vibrating element is placed in the water according to the desired orientation.

According to another aspect of the present invention, the above mentioned at least one degree of freedom comprises the distance of the vibrating element from the supporting structure. As mentioned this can be achieved, for example, by varying the length of the supporting arm of the vibrating element.

According to an aspect of the present invention, the at least one degree of freedom comprises the orientation of the axis of the vibrating element, typically with respect to the predominant water flow direction within the water course.

In particular, the adjusting means can be configured so that the axis of the vibrating element can be moved, in particular rotated, along a plane perpendicular to the arm axis, or with respect to a plane parallel to the arm axis. The two movements can also be combined.

Additionally, adjusting means can allow the vibrating element to be rotated around its own axis.

Further characteristics and advantages of the present invention will be more evident from the following description, made for an illustrative and non limiting purpose, with particular reference to the accompanying drawings, wherein:

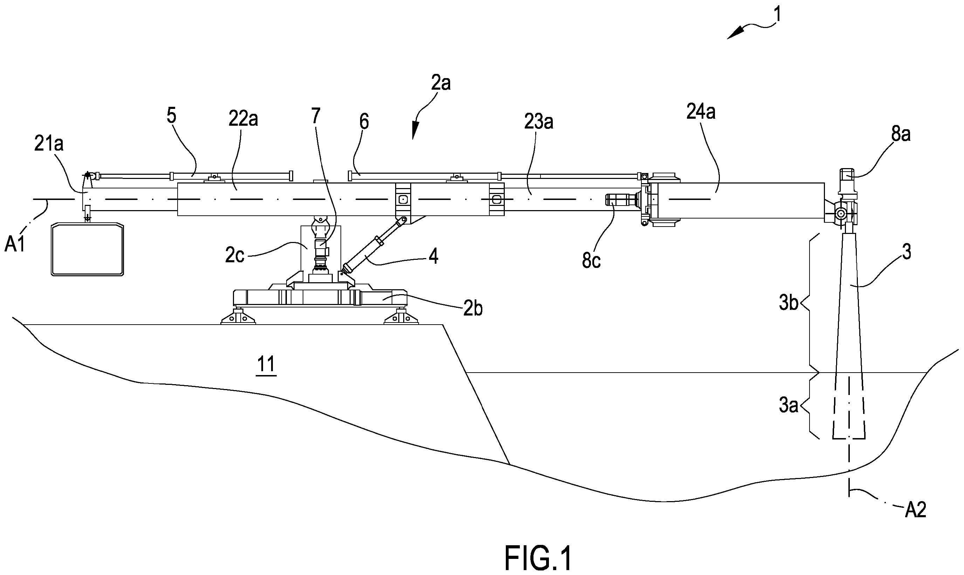

- figure 1 is a side view of an electric generator according to an embodiment of the present invention;
- figure 2 is a plant view of the generator of figure 1;

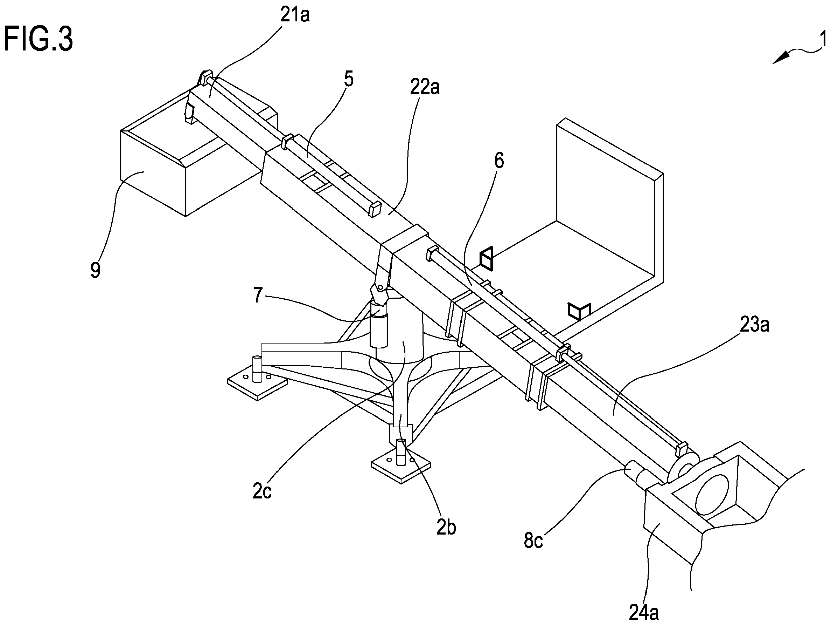

- figure 3 is a perspective view of the supporting structure of an electric generator according to an embodiment of the present invention;
- figure 4 is a perspective view of a vibrating element constrained to the supporting structure according to an embodiment of the present invention;

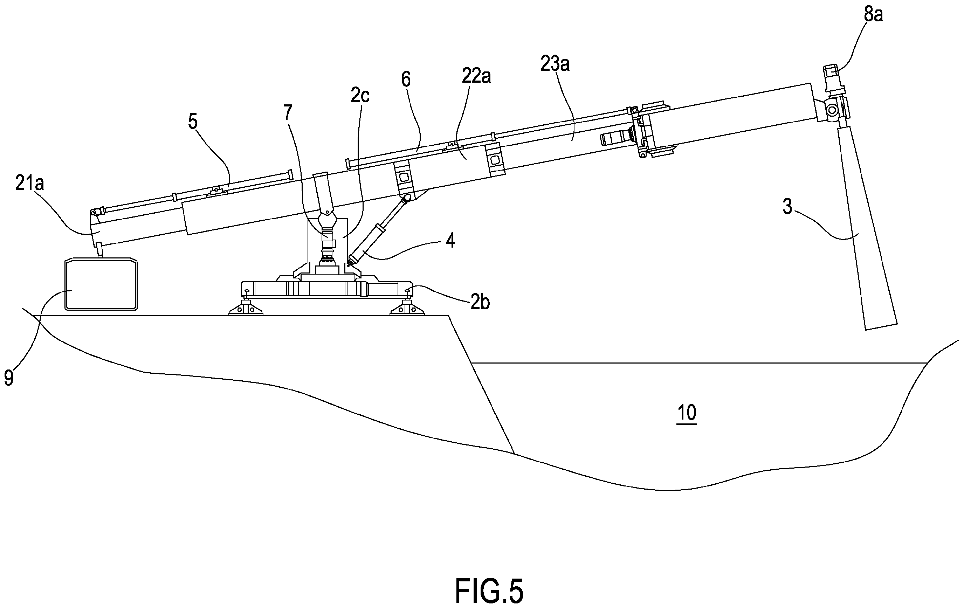

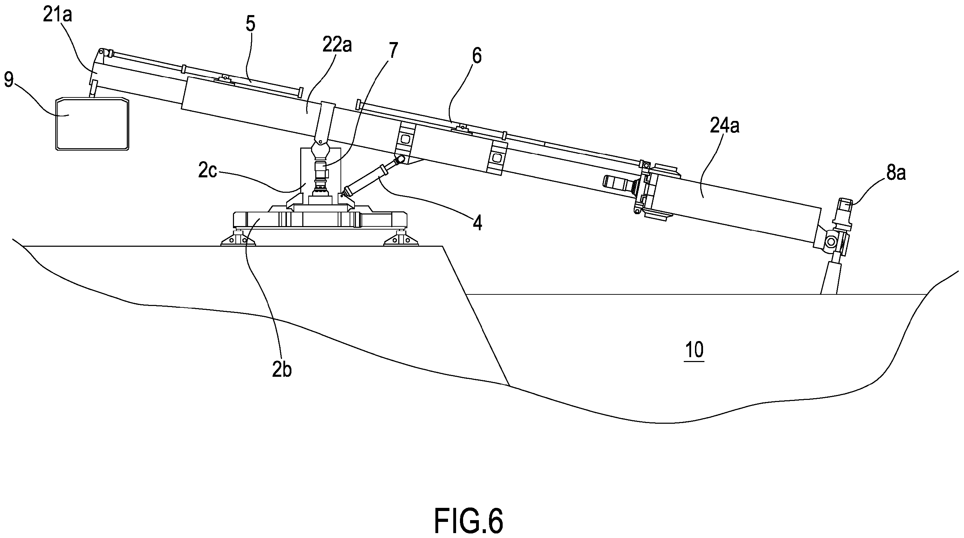

- figures 5 and 6 are side views of the electric generator according to the embodiment of figure 1, with the vibrating element located in two different positions with respect to the water course;
- figure 7 is a schematic representation of the vibration of the vibrating element according to a possible embodiment of the present invention;

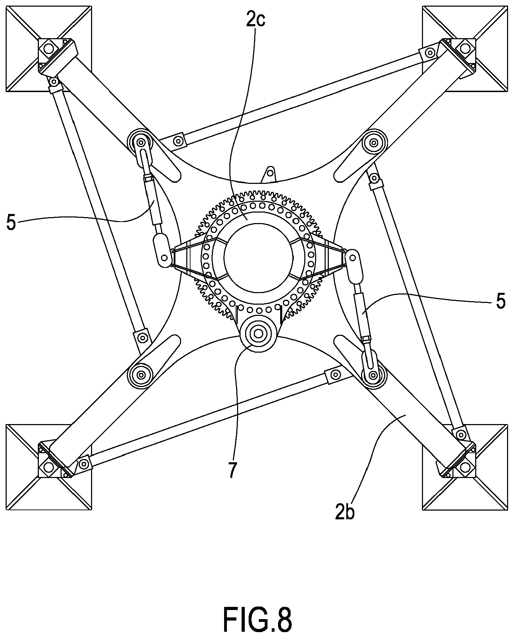

- figure 8 is a plant view of the supporting structure of the generator of figure 1, in which some elements have been removed for a simpler visualization.

Referring to the figures, according to an aspect of the present invention, an electric generator 1, hereinafter generator 1, is composed of a supporting structure 2 for constraining the generator 1 itself to the ground 11, and a vibrating element 3 whose vibration is caused, in use, by the water course 10.

The structure 2 is able to stably anchor the generator 1 to the ground and, at the same time, to support the vibrating element 3 and to counteract forces acting on the vibrating element 3 itself.

In the embodiment shown in the figures, the supporting structure 2 is composed of an arm 2a and a supporting platform 2b, which can be constrained to the ground 11 or laid thereon.

The arm 2a, according to a preferred aspect of the invention, has a development axis A1 and preferably has variable length along this development axis A1. In the embodiment shown herein, the arm 2a has telescopic configuration, i.e. it has several elements 21a, 22a, 23a (better described below) constrained to one another so as to be able to slide with respect to each other. Other types of extendible arms may be used in alternative embodiments (not shown) of the present invention.

As will be seen, this telescopic shape of the arm 2a can be adjusted by an operator through controlling means known per se in the art.

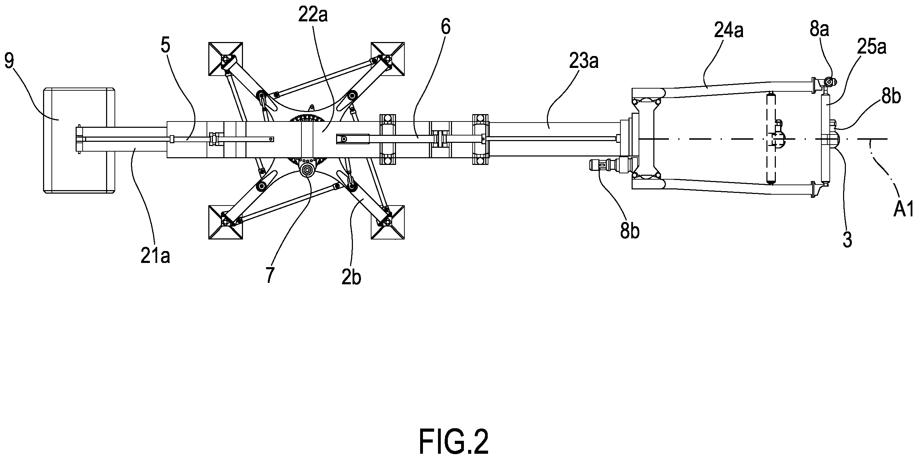

The vibrating element 3 is constrained to a first end of the arm 2a. In particular, a first end of the arm 2a is provided with a fork 24a on which a rod 25a, carrying the vibrating element 3, is mounted. It should be noted that herein reference will be made to a single vibrating element. It is also possible to constrain a number of vibrating elements 3 to the same structure. For example, referring to the shown embodiment, it is possible to mount several vibrating elements 3 on the same fork 24a, as shown in figure 2 by dashed lines.

Typically, a counterweight 9 is constrained to the arm 2a at the opposite end of the arm 2a.

Generally, the generator 1 can be provided with a counterweight in order to balance the weight of the vibrating element 3. This counterweight is preferably constrained to the supporting structure 2.

The generator 1 comprises adjusting means 4, 5, 6, 7, 8a, 8b, 8c to adjust the position of the vibrating element 3, the adjusting means being preferably constrained to the fixed structure 2. The adjusting means provide at least one degree of freedom to the vibrating element 3. In particular, the adjusting means 4, 5, 6, 7, 8a, 8b, 8c allow at least the variation -active and controlled- of the ratio between the volume of the portion 3a of the vibrating element 3 submerged in the water course 10 and the volume of the portion 3b of the vibrating element not submerged in the water course 10.

In the embodiment shown herein, such means comprise a jack 4 acting on the arm 2a so as to selectively move the arm 2a in an active and controlled way. In particular, this jack 4 is hinged to the arm 2a in order to allow the arm 2a and, thus, the vibrating element 3 constrained thereto to be raised or lowered.

Additional jacks 5 and 6 are arranged on the arm 2a so as to be able to adjust the length of the latter. In particular, the arm 2a is formed by several elements 21a, 22a, 23a arranged, as already mentioned, according to a telescopic configuration.

The central element 22a is constrained to the supporting platform 2b by means of a shaft 2c. The central element 22a typically has elongate shape and hollow section. The side elements 21a and 23a are constrained in such a way as to be able to slide (typically internally) with respect to the central element 22a and to be moved so as to partially protrude therefrom, according to the known telescopic configuration. The side elements 21a and 23a are typically moved along the axis of the arm 2a. The side elements 21a and 23a are arranged opposite each other with respect to the central element 22a. Typically, the counterweight 9 is constrained to a side element 21 whereas the fork 24a is constrained to the opposite side element 23a.

More in detail, the jacks 5 and 6 allow the movement of the side elements 21a and 23a. These jacks 5, 6 are typically mounted on the central part 22a and have a portion constrained to the respective side element 21a, 23a, so that the extension of the jack 5,6 allows the respective side element 21a, 23a to be moved.

In general, i.e. independently of the telescopic shape of the arm 2a, the arm 2a is preferably constrained to the supporting platform 2b by a shaft 2c. Preferably, a motor (typically an electric motor) 7 controlled in a known manner, for example by means of an appropriate automatic controller, allows the rotation of the shaft 2c around the axis of the shaft 2c itself, so as to allow the adjustment of the orientation of the axis of the arm 2a, and thus of the vibrating element 3 connected to the arm 2. According to an aspect of the invention, the generator 1 is provided with a sensor S adapted to measure the forces acting on the vibrating element 3. In particular, the sensor S is preferably arranged on the generator 1 so as to detect the forces acting on the vibrating element 3 along a direction parallel to the flow direction of the water course.

When these forces exceed a given threshold, the vibrating element 3 is preferably pulled out of the water course 10.

For example, referring to the embodiment shown herein, a sensor S is constrained to the shaft 2c in order to detect the forces acting on the vibrating element 3, i.e. the forces that tend to rotate the shaft 2c itself. In particular, the sensors S comprise at least one load cell. In the embodiment shown herein, when the detected force exceeds a threshold value, at least one element between the motor 8c and the jack 4 is actuated to pull the vibrating element 3 out of the water.

It should be noted that the use of sensors S constrained to the supporting structure 2 can advantageously be exploited even if the supporting structure does not support a vibrating element 3, but a different element adapted to be moved by a water course, such as for example a rotor of a hydraulic turbine, such as described for example in WO2014125449.

The vibrating element 3 is a component suitable to be vibrated when inserted into the water, in response to the motion of the water itself. Preferably, the vibrating element exploits the phenomenon known as "von Karman vortex street". This phenomenon is discussed, for example, in US2013119826 and is not explained in detail herein. Briefly, the vibrating element 3 is placed within a water course in which the water 10a is moving and generates vortexes V in the water downstream of the element itself, the vortexes causing a fluid-dynamic force F, F' (lift force) on the vibrating element 3. This fluid-dynamic force alternates its own orientation over time so as to cause the vibrating element 3 to vibrate.

Typically, the vibrating element 3 has elongated shape, i.e. has a development axis A2 and preferably has progressively increasing section along such development axis. In particular, the section preferably increases as the distance from the end of the vibrating element 3 constrained to the supporting structure 2 increases.

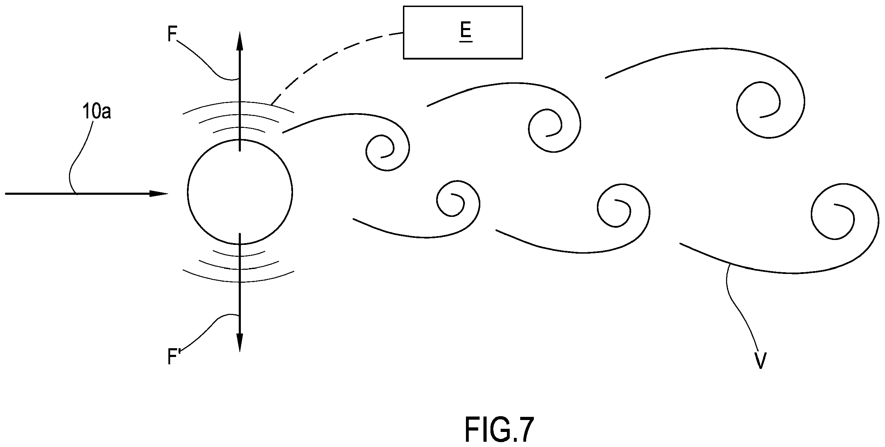

The vibration of the vibrating element 3 is converted in known manner into electrical energy by appropriate means E (schematically shown in FIG. 7), typically -but not exclusively- by exploiting the deformation of piezoelectric elements (not shown in detail). These piezoelectric elements, for example, may be part of the vibrating element or be connected thereto, so that the vibration of the vibrating element 3 causes the piezoelectric elements to be deformed and thus an electrical potential to be generated at the ends thereof.

Other means alternative (or additional) to the piezoelectric elements may be provided. For example, one or more linear electric generators can be used. As known, linear electric generators convert linear motion into electrical energy. The oscillation of the vibrating element generally has reduced angles, so that the motion of a component constrained to the vibrating element can be assimilated to a linear motion, thereby allowing the operation of the linear electric generator.

According to an aspect of the present invention, the vibrating element 3 is oriented inside the water course 10 so as to exploit the resonance of the vibrating element 3 (or portions thereof).

For this purpose, in order to change the orientation and/ or position of the vibrating element 3 in a controlled manner, further means may be provided.

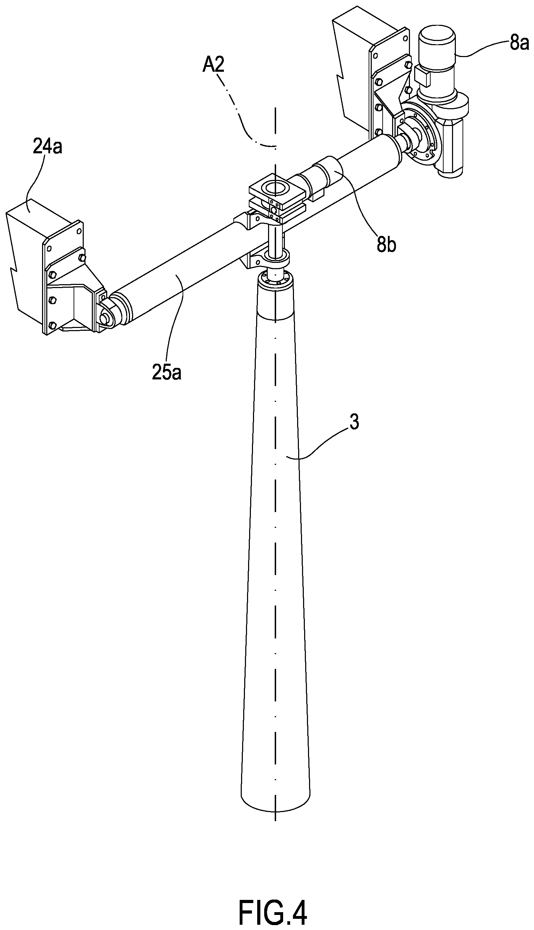

For example a motor 8, or in any case a means to allow a controlled movement (in particular rotation) able to change the inclination of the axis A2 of the vibrating element 3 with respect to the water flow 10, i.e. along a plane including the axis A1 of the arm 2a, can be provided. In particular, in the embodiment shown (see for example figure 4) the motor 8a can rotate the rod 25a to which the vibrating element 3 is constrained. As can be seen, the rod 25a preferably extends along a direction substantially perpendicular with respect to the development axis A2 of the vibrating element 3.

In the shown embodiment, the vibrating element 3 has substantially symmetrical shape with respect to the development axis A2. In other words, the vibrating element has substantially circular section, whose center is the axis A2. Furthermore, due to this progressively increasing section, the vibrating element has substantially truncated-cone shape.

However, in different embodiments not shown, an additional motor 8b can be provided, or in general means to allow the controlled movement can be provided in order to allow the rotation of the vibrating element 3 around its own axis A2. This solution is particularly useful when the vibrating element 3 has non-symmetrical shapes with respect to the axis A2, having for example polygonal, ellipsoidal or other irregularly shaped sections.

Finally, it is possible to provide means to allow the movement (particularly the rotation), controlled as well, of the axis A2 of the vibrating element 3 along a plane perpendicular to the axis A1 of the arm 2a. In the embodiment shown, there is a motor 8c connected to a respective controller and able to rotate the fork 24a around the axis A1 of the arm 2a. It should be noted that the adjustment of the ratio between the volume of the submerged portion 3a of the vibrating element 3 and the volume of the non-submerged portion 3b of the vibrating element 3 is affected by the operation of the motor 8c.

According to an aspect of the invention, the vibrating element can be inserted in water at a given angle (i.e. different from 90 degrees) with respect to the surface of the water. Referring to the present invention, the motor 8c can be operated so that the vibrating element can be inserted in water at an angle different from 90 degrees, for example close to 45 degrees.

From the above treatise, the operation of a generator 1 according to the present invention becomes clear. At first the supporting structure 2 has to be installed on the edge of the water course 10. Once the supporting structure is fixed to the ground, the vibrating element 3 is inserted in the flow of the water course 10.

Referring to the embodiment shown, the jacks 5 and 6 are operated in order to extend the arm 2a and then the jack 4 is operated for submerging the vibrating element 3 in the water course 10. As mentioned, the vibrating element 3 is submerged so as to obtain the target ratio between the volume of the submerged portion 3a and the volume of the non-submerged portion 3b.

Then, one or more adjusting means 5, 6, 7, 8a, 8b, 8c the machine is provided with, are operated such that the generator 1 is positioned in the highest efficiency position with respect to the flow of the water. In an embodiment, the machine can be provided with controlling means able to monitor the operative condition of the generator 1 and to control the operations of one or more adjusting means 4, 5, 6, 7, 8a, 8b, 8c to permanently keep the generator 1 in the condition of highest efficiency.

The flow of the water against the vibrating element 3 causes the vibrating element 3 to vibrate. An electric current is generated by means of the means M for converting the kinetic energy (i.e. the vibration) of the vibrating element 3. As mentioned, this operation typically comprises the deformation of one or more piezoelectric elements and/or the use of one or more linear generators generating an electric current in a known manner.

## Claims

1. Electric generator (1) suited to be installed in a water course (10), comprising a supporting structure (2) that is constrainable outside of the water course (10), a vibrating element (3) and means for converting the kinetic energy of said vibrating element (3) to electric energy, **characterized by** comprising position adjusting means (4, 5, 6, 7, 8a, 8b, 8c) to adjust the position of the vibrating element (3), said position adjusting means (4, 5, 6, 7, 8a, 8b, 8c) being designed to move with at least one degree of freedom, in an active and controlled way, said vibrating element (3) with respect to said supporting structure (2), wherein said at least one degree of freedom comprises the adjustment of the ratio of the volume of the portion (3a), submerged in said water course (10), of the vibrating element (3) to the volume of the portion (3b), non-submerged in the water course (10), of the vibrating element, **characterized in that** said vibrating element has a substantially axysimmetric shape.

2. Electric generator (1) according to claim 1, wherein said vibrating element (3) is designed so that to generate vortexes in said water course (10) downstream of said vibrating element (3), so that to induce a fluid-dynamic force (F, F') on said vibrating element (3).

3. Electric generator (1) according to claim 1 or 2, wherein said means for converting the energy comprise at least one piezoelectric element.

4. Electric generator (1) according to anyone of the preceding claims, wherein said vibrating element has a truncated-conical shape.

5. Electric generator (1) according to anyone of the preceding claims, wherein said supporting structure (2) comprises an arm (2a) for supporting said vibrating element (3).

6. Electric generator (1) according to claim 5, wherein said arm (2a) has variable length, said arm being preferably telescopic.

7. Electric generator (1) according to claim 5 or 6, comprising means (4, 7) for adjusting the position of the axis (A1) of said arm (2a).

8. Electric generator (1) according to anyone of the preceding claims, wherein said at least one degree of freedom comprises the distance of said vibrating element (3) from said supporting structure (2).

9. Electric generator (1) according to anyone of the preceding claims, wherein said at least one degree of freedom comprises the orientation of the axis (A2) of the vibrating element (3).

10. Electric generator (1) according to anyone of the preceding claims, wherein said supporting structure (2) is provided with at least one sensor (S) adapted to measure the forces acting on said vibrating element (3), said at least one sensor (S) being preferably designed to measure the forces acting on said vibrating element along a direction parallel to the flow direction of said water course.

## Patentansprüche

1. Elektrischer Generator (1), welcher zum Einbau in einen Wasserlauf (10) geeignet ist, umfassend eine außerhalb des Wasserlaufs (10) anbringbare Tragstruktur (2), ein Vibrationselement (3) und Mittel zum Umwandeln der kinetischen Energie des Vibrationselements (3) in elektrische Energie, **gekennzeichnet durch** Positionseinstellmittel (4, 5, 6, 7, 8a, 8b, 8c) zum Einstellen der Position des Vibrationselements (3), wobei die Positionseinstellmittel (4, 5, 6, 7, 8a, 8b, 8c) dazu eingerichtet sind, das Vibrationselement (3) hinsichtlich der Tragstruktur (2) mit mindestens einem Freiheitsgrad auf aktive und kontrollierte Weise zu bewegen, wobei der mindestens eine Freiheitsgrad die Einstellung des Verhältnisses des Volumens des im Wasserlauf (10) eingetauchten Teils (3a) des Vibrationselements (3) zum Volumen des nicht im Wasserlauf (10) eingetauchten Teils (3b) des Vibrationselements (3) umfasst, **dadurch gekennzeichnet, dass** das Vibrationselement eine im Wesentlichen achsensymmetrische Form aufweist.

2. Elektrischer Generator (1) gemäß Anspruch 1, wobei das Vibrationselement (3) dazu eingerichtet ist, stromabwärts des Vibrationselements (3) Wirbel im Wasserlauf (10) zu erzeugen, um am Vibrationselement (3) eine fluiddynamische Kraft (F, F') zu induzieren.

3. Elektrischer Generator (1) gemäß Anspruch 1 oder 2, wobei die Mittel zum Umwandeln der Energie mindestens ein piezoelektrisches Element umfassen.

4. Elektrischer Generator (1) gemäß einem der vorhergehenden Ansprüche, wobei das Vibrationselement eine kegelstumpfförmige Form aufweist.

5. Elektrischer Generator (1) gemäß einem der vorhergehenden Ansprüche, wobei die Tragstruktur (2) einen Arm (2a) zum Tragen des Vibrationselements (3) umfasst.

6. Elektrischer Generator (1) gemäß Anspruch 5, wobei der Arm (2a) eine variable Länge aufweist, wobei der Arm vorzugsweise ein Teleskoparm ist.

7. Elektrischer Generator (1) gemäß Anspruch 5 oder 6, umfassend Mittel (4, 7) zum Einstellen der Position der Achse (A1) des Arms (2a).

8. Elektrischer Generator (1) gemäß einem der vorhergehenden Ansprüche, wobei der mindestens eine Freiheitsgrad den Abstand des Vibrationselements (3) von der Tragstruktur (2) umfasst.

9. Elektrischer Generator (1) gemäß einem der vorhergehenden Ansprüche, wobei der mindestens eine Freiheitsgrad die Orientierung der Achse (A2) des Vibrationselements (3) umfasst.

10. Elektrischer Generator (1) gemäß einem der vorhergehenden Ansprüche, wobei die die Tragstruktur (2) mit mindestens einem Sensor (S) bereitgestellt ist, welcher zum Messen der auf das Vibrationselement (3) einwirkenden Kräfte eingerichtet ist, wobei der mindestens eine Sensor (S) vorzugsweise dazu eingerichtet ist, die auf das Vibrationselement entlang einer Richtung parallel zur Strömungsrichtung des Wasserlaufs einwirkenden Kräfte zu messen.

## Revendications

1. Générateur électrique (1) convenant pour être installé dans un cours d'eau (10), comprenant une structure de support (2) qui peut être maintenue à l'extérieur du cours d'eau (10), un élément vibrant (3) et un moyen pour convertir l'énergie cinétique dudit élément vibrant (3) en énergie électrique, **caractérisé en ce qu'**il comprend un moyen de réglage de position (4, 5, 6, 7, 8a, 8b, 8c) pour régler la position de l'élément vibrant (3), ledit moyen de réglage de position (4, 5, 6, 7, 8a, 8b, 8c) étant conçu pour déplacer avec au moins un degré de liberté, de manière active et contrôlée, ledit élément vibrant (3) par rapport à ladite structure de support (2), dans lequel ledit au moins un degré de liberté comprend le réglage du rapport du volume de la partie (3a), immergée dans ledit cours d'eau (10), de l'élément vibrant (3) au volume de la partie (3b), non immergée dans le cours d'eau (10), de l'élément vibrant, **caractérisé en ce que** ledit élément vibrant a une forme sensiblement axisymétrique.

2. Générateur électrique (1) selon la revendication 1, dans lequel ledit élément vibrant (3) est conçu pour générer des tourbillons dans ledit cours d'eau (10) en aval dudit élément vibrant (3) de manière à induire une force de dynamique de fluides (F, F') sur ledit élément vibrant (3).

3. Générateur électrique (1) selon la revendication 1 ou 2, dans lequel ledit moyen de conversion de l'énergie comprend au moins un élément piézoélectrique.

4. Générateur électrique (1) selon l'une quelconque des revendications précédentes, dans lequel ledit élément vibrant a une forme tronconique.

5. Générateur électrique (1) selon l'une quelconque des revendications précédentes, dans lequel ladite structure de support (2) comprend un bras (2a) pour supporter ledit élément vibrant (3).

6. Générateur électrique (1) selon la revendication 5, dans lequel ledit bras (2a) a une longueur variable, ledit bras étant de préférence télescopique.

7. Générateur électrique (1) selon la revendication 5 ou 6, comprenant un moyen (4, 7) pour régler la position de l'axe (A1) dudit bras (2a).

8. Générateur électrique (1) selon l'une quelconque des revendications précédentes, dans lequel ledit au moins un degré de liberté comprend la distance dudit élément vibrant (3) depuis ladite structure de support (2).

9. Générateur électrique (1) selon l'une quelconque des revendications précédentes, dans lequel ledit au moins un degré de liberté comprend l'orientation de l'axe (A2) de l'élément vibrant (3).

10. Générateur électrique (1) selon l'une quelconque des revendications précédentes, dans lequel ladite structure de support (2) est pourvue d'au moins un capteur (S) qui est à même de mesurer les forces agissant sur ledit élément vibrant (3), ledit au moins un capteur (S) étant de préférence conçu pour mesurer les forces agissant sur ledit élément vibrant le long d'une direction parallèle à la direction d'écoulement dudit cours d'eau.
